# EUROPEAN PATENT APPLICATION

(11) **EP 4 611 097 A1**
(43) Date of publication of application: **03.09.2025**
(21) Application number: 25161003.6
(22) Date of filing: 28.02.2025
(51) Int. Cl.: H01M 10/0525, H01M 4/02

(54) **NEGATIVE ELECTRODE SHEET, BATTERY CORE, AND ELECTRIC DEVICE**

(30) Priority: 29.02.2024 CN 202420395079 U
(71) Applicant: BYD Company Limited, Shenzhen, Guangdong 518118 (CN)
(72) Inventor: XIAO, Jing, Shenzhen, 518118 (CN); PAN, Zhiyong, Shenzhen, 518118 (CN); CHEN, Na, Shenzhen, 518118 (CN); PAN, Yi, Shenzhen, 518118 (CN)
(74) Representative: Mathys & Squire

(57) **Abstract**

Provided are a negative electrode sheet, a battery core, and an electric device. The electric device includes the battery core. The battery core includes the negative electrode sheet. The negative electrode sheet includes a first region and a second region. The second region surrounds the first region. A surface density of an active material in at least part of the second region is less than a surface density of an active material in the first region. The present disclosure reduces a probability of lithium precipitation at an edge of an electrode sheet.

## Description

### FIELD

The present disclosure relates to the field of battery technologies, and specifically, to a negative electrode sheet, a battery core, and an electric device.

### BACKGROUND

Currently, lithium-ion batteries are widely used in people's daily lives due to advantages such as high energy density and fast charging and discharging. In related arts, when a user uses a lithium-ion battery, the lithium-ion battery is frequently charged and discharged. During charging and discharging of the battery, lithium at an edge of a negative electrode opposite a positive electrode diffuses to an overhang area. As a result, during charging, a state of charge (SOC, which refers to a ratio of a remaining capacity to a battery capacity) of an edge position on the negative electrode is lower than that of a middle position on the negative electrode, resulting in lithium precipitation at the edge of the electrode sheet.

### SUMMARY

An objective of the present disclosure is to provide a negative electrode sheet, a battery core, and an electric device, to resolve the problem of lithium precipitation at an edge of an electrode sheet.

To achieve the objective of the present disclosure, the present disclosure provides the following technical solutions.

According to a first aspect, the present disclosure provides a negative electrode sheet, including a first region and a second region. The second region surrounds the first region. A surface density of an active material in at least part of the second region is less than a surface density of an active material in the first region.

In an example, the surface density of the active material in the first region is A1, and the surface density of the active material in at least part of the second region is A2, satisfying: 5%≤(A1-A2)/A1≤30%.

In an example, the first region is rectangular. The first region includes a first inner edge, a second inner edge, a third inner edge, and a fourth inner edge connected in sequence. The second region includes a first outer edge, a second outer edge, a third outer edge, and a fourth outer edge connected in sequence. The first inner edge is close to and parallel to the first outer edge. The second inner edge is close to and parallel to the second outer edge. The third inner edge is close to and parallel to the third outer edge. The fourth inner edge is close to and parallel to the fourth outer edge.

In an example, a length of the second inner edge is less than a length of the first inner edge. A surface density of a region between the first inner edge and the first outer edge is less than the surface density of the first region. A surface density of a region between the third inner edge and the third outer edge is less than the surface density of the first region.

In an example, a width of the second region is L, satisfying: 2 mm≤L≤20 mm.

In an example, widths of positions in the second region are equal.

In an example, a compaction density of the active material on the negative electrode sheet ranges from 1.2 g/cm³ to 2.0 g/cm³.

In an example, the surface density of the active material on the negative electrode sheet ranges from 50 g/m² to 200 g/m².

According to a second aspect, the present disclosure further provides a battery core, including a positive electrode sheet and the negative electrode sheet as described in the first aspect. The positive electrode sheet and the negative electrode sheet are stacked. Four edges of an orthographic projection of the positive electrode sheet on the negative electrode sheet exceed the four edges of the first region and are located within the second region.

In an example, the positive electrode sheet and the first region are both rectangular. The positive electrode sheet includes a first edge. The first region includes the first inner edge. The second region includes the first outer edge close to the first inner edge. The first edge, the first inner edge, and the first outer edge are parallel. The first edge is located between the first inner edge and the first outer edge.

In an example, a distance between the first edge and the first inner edge is B, satisfying: 2 mm≤B≤10 mm.

In an example, the battery core further includes a positive electrode tab, where one end of the positive electrode tab is connected to the positive electrode sheet, and another end extends out of an edge of the negative electrode sheet.

According to a third aspect, the present disclosure further provides an electric device, including an electric apparatus and the battery core described in the second aspect. The battery core supplies power to the electric apparatus.

The negative electrode sheet, the battery core, and the electric device are provided. The electric device includes the battery core. The battery core includes the negative electrode sheet. The negative electrode sheet includes the first region and the second region. The second region surrounds the first region. The surface density of the active material in at least part of the second region is less than the surface density of the active material in the first region. During charging and discharging of the battery, since the surface density of the active material in at least part of the second region opposite an edge of the positive electrode is less than the surface density of the active material in the first region, an SOC of the edge of the negative electrode is increased, and a difference between SOCs of an edge position on the electrode sheet and a middle position on the electrode sheet is reduced, thereby reducing the probability of lithium precipitation at the edge of the electrode sheet.

### BRIEF DESCRIPTION OF THE DRAWINGS

To describe the technical solutions in the examples of the present disclosure or the related art more clearly, the accompanying drawings required for describing the examples or the related art are introduced briefly below. It will be apparent that, the accompanying drawings described below show only some examples of the present disclosure, and a person of ordinary skill in the art can derive other drawings from the accompanying drawings without creative efforts.
FIG. 1 is a schematic structural diagram of a battery core according to an example; and
FIG. 2 is a schematic structural diagram of a negative electrode sheet according to an example.

In the drawings:
10: Negative electrode sheet; 11: First region; 111: First inner edge; 112: Second inner edge; 113: Third inner edge; 114: Fourth inner edge; 12: Second region; 121: First outer edge; 122: Second outer edge; 123: Third outer edge; 124: Fourth outer edge; 125: First sub-region; 126: Second sub-region; 20: Positive electrode sheet; 21: First edge; 22: Positive electrode tab; B: Distance between the first edge and the first inner edge; L: Width of the second region; X: Second direction of the first region; and Y: First direction of the first region.

### DETAILED DESCRIPTION

The following clearly and completely describes the technical solutions in the examples of the present disclosure with reference to the accompanying drawings in the examples of the present disclosure. It will be apparent that, the described examples are merely some but not all of the examples of the present disclosure. All other examples obtained by a person of ordinary skill in the art based on the examples of the present disclosure without creative efforts shall fall within the protection scope of the present disclosure.

It should be noted that, when a component is referred to as "being fixed to" another component, the component may be directly on another component, or an intervening component may exist. When a component is considered to be "connected to" another component, the component may be directly connected to another component, or an intervening component may exist.

Unless otherwise defined, meanings of all technical and scientific terms used in the present disclosure are the same as those usually understood by a person skilled in the art to which the present disclosure belongs. The terms used in the specification of the present disclosure are only for the objective of describing specific examples and are not intended to limit the present disclosure. A term "and/or" used in the present disclosure includes any or all combinations of one or more related listed items.

The following describes some examples of the present disclosure in detail with reference to the accompanying drawings. The following examples and features in the examples may be mutually combined in case that no conflict occurs.

Currently, during charging and discharging of a battery, lithium at an edge of a negative electrode opposite a positive electrode diffuses to an overhang area. As a result, during charging, an SOC of an edge position on the negative electrode is lower than that of a middle position on the negative electrode, resulting in lithium precipitation of the electrode sheet

The present disclosure provides a negative electrode sheet 10, including a first region 11 and a second region 12. The second region 12 surrounds the first region 11. A surface density of an active material in at least part of the second region 12 is less than a surface density of an active material in the first region 11. Optionally, materials of the negative electrode sheet 10 may be graphite, silicon, lithium titanate, or the like.

Specifically, that the negative electrode sheet 10 includes the first region 11 and the second region 12 means that the negative electrode sheet 10 includes the first region 11 and the second region 12 on a plane perpendicular to a thickness direction of the negative electrode sheet 10; That the second region 12 surrounds the first region 11 means that the second region 12 surrounds the first region 11 on the plane perpendicular to the thickness direction of the negative electrode sheet 10.

The negative electrode sheet 10, a battery core, and an electric device are provided. The electric device includes the battery core. The battery core includes the negative electrode sheet 10. The negative electrode sheet 10 includes the first region 11 and the second region 12. The second region 12 surrounds the first region 11. The surface density of the active material in at least part of the second region 12 is less than the surface density of the active material in the first region 11. During charging and discharging of the battery, since the surface density of the active material in at least part of the second region 12 at an edge of the negative electrode sheet opposite the positive electrode is less than the surface density of the active material in the first region 11, an SOC of the edge of the negative electrode is increased, and a difference between SOCs of an edge position on the electrode sheet and a middle position on the electrode sheet is reduced, thereby reducing the probability of lithium precipitation at the edge of the electrode sheet.

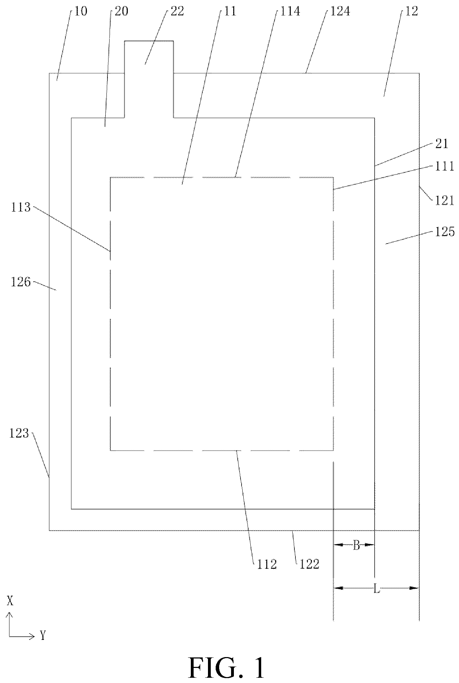

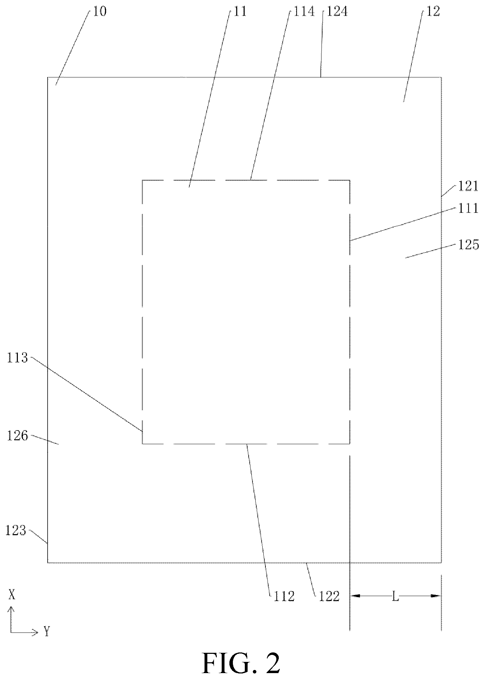

In an example, referring to FIG. 1 and FIG. 2, the surface density of the active material in the first region 11 is A1, and the surface density of the active material in at least part of the second region 12 is A2, satisfying: 5%≤(A1-A2)/A1≤30%.

Optionally, a result of (A1-A2)/A1 may specifically be, but is not limited to, 5%, 10%, 15%, 20%, 25%, and 30%.

Specifically, in the foregoing arrangement, a probability of lithium precipitation at the edge of the electrode sheet is reduced.

In an example, referring to FIG. 1 and FIG. 2, the first region 11 is rectangular. The first region 11 includes a first inner edge 111, a second inner edge 112, a third inner edge 113, and a fourth inner edge 114 connected in sequence. The second region 12 includes a first outer edge 121, a second outer edge 122, a third outer edge 123, and a fourth outer edge 124 connected in sequence. The first inner edge 111 is close to and parallel to the first outer edge 121. The second inner edge 112 is close to and parallel to the second outer edge 122. The third inner edge 113 is close to and parallel to the third outer edge 123. The fourth inner edge 114 is close to and parallel to the fourth outer edge 124.

Specifically, that the first region 11 is rectangular means that the first region 11 is rectangular on the plane perpendicular to the thickness direction of the negative electrode sheet 10.

Specifically, the second region 12 is a region within a figure formed by the first outer edge 121, the second outer edge 122, the third outer edge 123, and the fourth outer edge 124, and outside the first region 11. Optionally, the first inner edge 111 is closer to a center of the negative electrode sheet 10 than the first outer edge 121, the second inner edge 112 is closer to the center of the negative electrode sheet 10 than the second outer edge 122, the third inner edge 113 is closer to the center of the negative electrode sheet 10 than the third outer edge 123, and the fourth inner edge 114 is closer to the center of the negative electrode sheet 10 than the fourth outer edge 124.

Specifically, in the foregoing arrangement, the first region 11 and the second region 12 are standardized for large-scale production, improving production efficiency.

In an example, referring to FIG. 1 FIG. 2, a length of the second inner edge 112 is less than a length of the first inner edge 111. A surface density of a region between the first inner edge 111 and the first outer edge 121 is less than the surface density of the first region 11. A surface density of a region between the third inner edge 113 and the third outer edge 123 is less than the surface density of the first region 11.

Specifically, the second region 12 includes a first sub-region 125 and a second sub-region 126. The first sub-region 125 refers to the region between the first inner edge 111 and the first outer edge 121, and the second sub-region 126 refers to the region between the third inner edge 113 and the third outer edge 123.

Specifically, in the foregoing arrangement, a long side edge region of the negative electrode sheet 10 is preferentially thinned. An area of the long side edge region accounts for a larger proportion of an area of the second region 12 than an area of a short side edge region. Compared with thinning the short side edge region, preferentially thinning the long side edge region of the negative electrode sheet 10 can increase a thinning area, further reduce a difference between SOCs of an edge position on the electrode sheet and a middle position on the electrode sheet, and help reduce complexity of the process and improve production efficiency.

In an example, referring to FIG. 1 FIG. 2, a width of the second region 12 is L, satisfying: 2 mm≤L≤20 mm.

Optionally, the width L of the second region may specifically be, but is not limited to, 2 mm, 3 mm, 4 mm, 5 mm, 6 mm, 8 mm, 10 mm, 20 mm, and the like.

Specifically, a distance between the first inner edge 111 and the first outer edge 121 is a width of the second region 12, a distance between the second inner edge 112 and the second outer edge 122 is a width of the second region 12, a distance between the third inner edge 113 and the third outer edge 123 is a width of the second region 12, and a distance between the fourth inner edge 114 and the fourth outer edge 124 is a width of the second region 12.

In an example, referring to FIG. 1 FIG. 2, widths of positions in the second region 12 are equal.

Specifically, a center of the first region 11 coincides with a center of the second region 12.

Specifically, the center of the first region 11 is an intersection of diagonal lines of a rectangle formed by the first inner edge 111, the second inner edge 112, the third inner edge 113, and the fourth inner edge 114.

Specifically, the center of the second region 12 is an intersection of diagonal lines of a rectangle formed by the first outer edge 121, the second outer edge 122, the third outer edge 123, and the fourth outer edge 124.

Specifically, in the foregoing arrangement, the second region 12 is standardized for large-scale production, improving production efficiency.

In an example, referring to FIG. 1 and FIG. 2, a compaction density of the active material on the negative electrode sheet 10 ranges from 1.2 g/cm³ (grams per cubic centimeter) to 2.0 g/cm³.

Optionally, the compaction density of the active material on the negative electrode sheet 10 may specifically be, but is not limited to, 1.2 g/cm³, 1.3 g/cm³, 1.4 g/cm³, 1.5 g/cm³, 1.6 g/cm³, and 2.0 g/cm³.

In an example, referring to FIG. 1 and FIG. 2, the surface density of the active material on the negative electrode sheet 10 ranges from 50 g/m² to 200 g/m².

Optionally, the surface density of the active material on the negative electrode sheet 10 may specifically be, but is not limited to, 50 g/m², 60 g/m², 70 g/m², 80 g/m², 90 g/m², 100 g/m², and 150 g/m².

Specifically, in the foregoing arrangement, value ranges of the compaction density and the surface density of the active material on the negative electrode sheet 10 are improved, and the structure of the negative electrode sheet 10 is improved.

The present disclosure further provides a battery core, including a positive electrode sheet 20 and the foregoing negative electrode sheet 10. The positive electrode sheet 20 and the negative electrode sheet 10 are stacked. Four edges of an orthographic projection of the positive electrode sheet 20 on the negative electrode sheet 10 exceed the four edges of the first region 11 and are located within the second region 12.

Specifically, in the orthographic projection of the positive electrode sheet 20 on the negative electrode sheet 10, the four edges of the orthographic projection exceed the four edges of the first region 11 and are located within the second region 12.

Optionally, the active material on the positive electrode sheet 20 is any one of lithium iron phosphate, lithium manganese iron phosphate, lithium cobaltate, lithium manganate, and lithium titanate.

Optionally, a compaction density of the active material on the positive electrode sheet 20 ranges from 2.3 g/cm³ to 3.0 g/cm³.

Optionally, the compaction density of the active material on the positive electrode sheet 20 may specifically be, but is not limited to, 2.3 g/cm³, 2.4 g/cm³, 2.5 g/cm³, 2.6 g/cm³, 3.0 g/cm³, and the like.

Optionally, the surface density of the active material on the positive electrode sheet 20 ranges from 50 g/m² to 300 g/m².

Optionally, the surface density of the active material on the positive electrode sheet 20 may specifically be, but is not limited to, 50 g/m², 60 g/m², 70 g/m², 80 g/m², 90 g/m², 300 g/m², and the like.

Optionally, the positive electrode sheet 20 includes a positive electrode current collector having an active material thereon, and the positive electrode current collector includes, but is not limited to, any one of aluminum foil, carbon-coated aluminum foil, and composite aluminum foil. Active materials on the positive electrode sheet 20 further include a conductive agent, a binder, and the like. The conductive agent includes any one or more of graphite, carbon black, acetylene black, graphene, carbon fiber, and carbon nanotube. The binder may be one or more of polyvinylidene chloride, polyfluoroalkoxy, styrene-butadiene rubber, hydroxypropyl methyl cellulose, methyl cellulose, carboxymethyl cellulose, polyvinyl alcohol, acrylonitrile copolymer, sodium alginate, chitosan, and chitosan derivative.

In an example, referring to FIG. 1 and FIG. 2, the positive electrode sheet 20 and the first region 11 are both rectangular. The positive electrode sheet 20 includes a first edge 21. The first region 11 includes the first inner edge 111. The second region 12 includes the first outer edge 121 close to the first inner edge 111. The first edge 21, the first inner edge 111, and the first outer edge 121 are parallel. The first edge 21 is located between the first inner edge 111 and the first outer edge 121.

Specifically, long sides of the positive electrode sheet 20, long sides of the first region 11, and long sides of the second region 12 are parallel, and short sides of the positive electrode sheet 20, short sides of the first region 11, and short sides of the second region 12 are parallel.

In an example, referring to FIG. 1 and FIG. 2, a center of the positive electrode sheet 20 coincides with the center of the negative electrode sheet 10, and a distance between the first edge and the first inner edge is B, satisfying: 2 mm≤B≤10 mm.

Optionally, the distance B between the first edge and the first inner edge may specifically be, but is not limited to, 2 mm, 3 mm, 4 mm, 5 mm, 6 mm, 7 mm, and 10 mm.

In an example, referring to FIG. 1 and FIG. 2, the battery core further includes a positive electrode tab 22. An end of the positive electrode tab 22 is connected to the positive electrode sheet 20, and another end of the positive electrode tab 22 extends out of an edge of the negative electrode sheet 10.

Optionally, one end of the positive electrode tab 22 is connected to the positive electrode sheet 20, and the other end extends out of the edge of the negative electrode sheet 10 by 1 mm to 10 mm.

Optionally, one end of the positive electrode tab 22 is connected to the positive electrode sheet 20, and the other end extends out of the edge of the negative electrode sheet 10 specifically by, but not limited to, 1 mm, 2 mm, 3 mm, 6 mm, 8 mm, and 10 mm.

Optionally, the negative electrode sheet 10 is rectangular. An area of the negative electrode sheet 10 is larger than an area of the positive electrode sheet 20. The center of the negative electrode sheet 10 coincides with the center of the positive electrode sheet 20. Along side of the negative electrode sheet 10 is 2 mm longer than the long side of the positive electrode sheet 20, and a short side of the negative electrode sheet 10 is 2 mm longer than a short side of the positive electrode sheet 20.

The present disclosure further provides an electric device, including an electric apparatus and the foregoing battery core, where the battery core supplies power to the electric apparatus.

Optionally, the battery may be a blade battery, a block battery, a cylindrical battery, a button battery, or the like. This is not limited in the present disclosure. A preparation process of the battery may be lamination, winding, or the like. This is not limited. The shell can be a plastic shell, a steel shell, an aluminum shell, or the like. This is not limited.

The technical solutions of the present disclosure are described in detail below by using specific examples.

### Example 1

This example provides a negative electrode sheet 10, a battery core, and an electric device. In the battery core, an area of the negative electrode sheet 10 is larger than an area of a positive electrode sheet 20. An active material on the negative electrode sheet 10 includes graphite, and an active material on the positive electrode sheet 20 includes lithium iron phosphate.

A negative electrode sheet 10 is prepared. The negative electrode sheet 10 includes a first region 11 and a second region 12. The second region 12 surrounds the first region 11. A surface density A1 of an active material in the first region 11 is 100 g/m², and a surface density A2 of an active material in the second region 12 is 95 g/m². A result of (A1-A2)/A1 is 5%. A compaction density of an active material on the negative electrode sheet 10 is 1.6 g/cm³, and the surface density of the active material on the negative electrode sheet 10 is 100 g/m². L is 3 mm. A distance B between a first edge 21 and a first inner edge 111 is 2 mm. The surface density of the active material on the positive electrode sheet 20 is 220 g/m², and a compaction density of the active material on the positive electrode sheet 20 is 2.6 g/cm³. The negative electrode sheet 10, the positive electrode sheet 20, and a separator are used to prepare a battery core, and the battery core is assembled into a battery.

### Example 2

This example provides a negative electrode sheet 10, a battery core, and an electric device. In the battery core, an area of the negative electrode sheet 10 is larger than an area of a positive electrode sheet 20. An active material on the negative electrode sheet 10 includes graphite, and an active material on the positive electrode sheet 20 includes lithium iron phosphate.

A negative electrode sheet 10 is prepared. The negative electrode sheet 10 includes a first region 11 and a second region 12. The second region 12 surrounds the first region 11. A surface density A1 of an active material in the first region 11 is 100 g/m², and a surface density A2 of an active material in the second region 12 is 90 g/m². A result of (A1-A2)/A1 is 10%. A compaction density of an active material on the negative electrode sheet 10 is 1.6 g/cm³, and a surface density of the active material on the negative electrode sheet 10 is 100 g/m². L is 3 mm. A distance B between a first edge 21 and a first inner edge 111 is 2 mm. The surface density of the active material on the positive electrode sheet 20 is 220 g/m², and a compaction density of the active material on the positive electrode sheet 20 is 2.6 g/cm³. The negative electrode sheet 10, the positive electrode sheet 20, and a separator are used to prepare a battery core, and the battery core is assembled into a battery.

### Example 3

This example provides a negative electrode sheet 10, a battery core, and an electric device. In the battery core, an area of the negative electrode sheet 10 is larger than an area of a positive electrode sheet 20. An active material on the negative electrode sheet 10 includes graphite, and an active material on the positive electrode sheet 20 includes lithium iron phosphate.

A negative electrode sheet 10 is prepared. The negative electrode sheet 10 includes a first region 11 and a second region 12. The second region 12 surrounds the first region 11. A surface density A1 of an active material in the first region 11 is 100 g/m², and a surface density A2 of an active material in the second region 12 is 85 g/m². A result of (A1-A2)/A1 is 15%. A compaction density of an active material on the negative electrode sheet 10 is 1.6 g/cm³, and a surface density of the active material on the negative electrode sheet 10 is 100 g/m². L is 3 mm. A distance B between a first edge 21 and a first inner edge 111 is 2 mm. The surface density of the active material on the positive electrode sheet 20 is 220 g/m², and a compaction density of the active material on the positive electrode sheet 20 is 2.6 g/cm³. The negative electrode sheet 10, the positive electrode sheet 20, and a separator are used to prepare a battery core, and the battery core is assembled into a battery.

### Example 4

This example provides a negative electrode sheet 10, a battery core, and an electric device. In the battery core, an area of the negative electrode sheet 10 is larger than an area of a positive electrode sheet 20. An active material on the negative electrode sheet 10 includes graphite, and an active material on the positive electrode sheet 20 includes lithium iron phosphate.

A negative electrode sheet 10 is prepared. The negative electrode sheet 10 includes a first region 11 and a second region 12. The second region 12 surrounds the first region 11. A surface density A1 of an active material in the first region 11 is 100 g/m², and a surface density A2 of an active material in the second region 12 is 80 g/m². A result of (A1-A2)/A1 is 20%. A compaction density of an active material on the negative electrode sheet 10 is 1.6 g/cm³, and the surface density of the active material on the negative electrode sheet 10 is 100 g/m². L is 3 mm. A distance B between a first edge 21 and a first inner edge 111 is 2 mm. The surface density of the active material on the positive electrode sheet 20 is 220 g/m², and a compaction density of the active material on the positive electrode sheet 20 is 2.6 g/cm³. The negative electrode sheet 10, the positive electrode sheet 20, and a separator are used to prepare a battery core, and the battery core is assembled into a battery.

### Example 5

This example provides a negative electrode sheet 10, a battery core, and an electric device. In the battery core, an area of the negative electrode sheet 10 is larger than an area of a positive electrode sheet 20. An active material on the negative electrode sheet 10 includes graphite, and an active material on the positive electrode sheet 20 includes lithium iron phosphate.

A negative electrode sheet 10 is prepared. The negative electrode sheet 10 includes a first region 11 and a second region 12. The second region 12 surrounds the first region 11. A surface density A1 of an active material in the first region 11 is 100 g/m², and a surface density A2 of an active material in the second region 12 is 75 g/m². A result of (A1-A2)/A1 is 25%. A compaction density of an active material on the negative electrode sheet 10 is 1.6 g/cm³, and the surface density of the active material on the negative electrode sheet 10 is 100 g/m². L is 3 mm. A distance B between a first edge 21 and a first inner edge 111 is 2 mm. The surface density of the active material on the positive electrode sheet 20 is 220 g/m², and a compaction density of the active material on the positive electrode sheet 20 is 2.6 g/cm³. The negative electrode sheet 10, the positive electrode sheet 20, and a separator are used to prepare a battery core, and the battery core is assembled into a battery.

### Comparative example 1

This example provides a negative electrode sheet 10, a battery core, and an electric device. In the battery core, an area of the negative electrode sheet 10 is larger than an area of a positive electrode sheet 20. An active material on the negative electrode sheet 10 includes graphite, and an active material on the positive electrode sheet 20 includes lithium iron phosphate.

A negative electrode sheet 10 is prepared. The negative electrode sheet 10 includes a first region 11 and a second region 12. The second region 12 surrounds the first region 11. A surface density A1 of an active material in the first region 11 is 100 g/m², and a surface density A2 of an active material in the second region 12 is 100 g/m². A result of (A1-A2)/A1 is 0. A compaction density of an active material on the negative electrode sheet 10 is 1.6 g/cm³, and the surface density of the active material on the negative electrode sheet 10 is 100 g/m². L is 3 mm. A distance B between a first edge 21 and a first inner edge 111 is 2 mm. The surface density of the active material on the positive electrode sheet 20 is 220 g/m², and a compaction density of the active material on the positive electrode sheet 20 is 2.6 g/cm³. The negative electrode sheet 10, the positive electrode sheet 20, and a separator are used to prepare a battery core, and the battery core is assembled into a battery.

### A test method for the battery is as follows:

Capacity retention rate after 500 cycles: The battery is charged to 3.8 V at a constant current of 0.33 C and left for 30 minutes. The battery is then discharged to a discharge end voltage of 2.0 V at a current of 0.33 C and left for 30 minutes. The two steps are repeated for a total of 500 times. A first discharge capacity is recorded as a battery discharge capacity C1, and a discharge capacity of the 500^{th} cycle is recorded as C500. Capacity retention rate of 500 cycles %=(C500/C1)×100%.

Capacity retention rate after 1000 cycles: The battery is charged to 3.8 V at a constant current of 0.33 C and left for 30 minutes. The battery is then discharged to a discharge end voltage of 2.0 V at a current of 0.33 C and left for 30 minutes. The two steps are repeated for a total of 1000 times. A first discharge capacity is recorded as a battery discharge capacity C1, and a discharge capacity of the 500^{th} cycle is recorded as C1000. Capacity retention rate of 1000 cycles %=(C1000/C1)×100%.

Capacity retention rate after 1500 cycles: The battery is charged to 3.8 V at a constant current of 0.33 C and left for 30 minutes. The battery is then discharged to a discharge end voltage of 2.0 V at a current of 0.33 C and left for 30 minutes. The two steps are repeated for a total of 1500 times. A first discharge capacity is recorded as a battery discharge capacity C1, and a discharge capacity of the 500^{th} cycle is recorded as C1500. Capacity retention rate of 1500 cycles %=(C1500/C1)×100%.

**Table 1 shows values of A2/A1 of Examples 1 to 5 and Comparative example 1, and corresponding capacity retention rates of the battery core of Examples 1 to 5 and Comparative example 1 after 500, 1000, and 1500 cycles of charging using the above test methods respectively.**

| **Negative electrode sheet design** | **(A1-A2)/A1 (%)** | **Capacity retention after 500 cycles** | **Capacity retention after 1000 cycles** | **Capacity retention after 1500 cycles** |
|---|---|---|---|---|
| Example 1 | 5 | 92.7% | 88.3% | 84.2% |
| Example 2 | 10 | 93.1% | 88.8% | 84.8% |
| Example 3 | 15 | 93.5% | 89.3% | 85.3% |
| Example 4 | 20 | 93.9% | 89.7% | 85.8% |
| Example 5 | 25 | 94.2% | 90.1% | 86.1% |
| Comparative example 1 | 0 | 91.3% | 86.4% | 82.8% |

Through comparison of the values of (A1-A2)/A1 of Examples 1 to 5 and Comparative example 1, and the corresponding capacity retention rates of cyclic charging, the data in the above table shows that: During charging and discharging of the battery, since the surface density of the active material in at least part of the second region 12 opposite the edge of the positive electrode is less than the surface density of the active material in the first region 11, a probability of lithium precipitation at the edge of the electrode sheet is reduced.

In the description of the examples of the present disclosure, it should be described that, orientation or position relationships indicated by the terms such as "first direction", "second direction", "first distance", "second distance", "center", "on", "below", "left", "right", "vertical", "horizontal", "inside", and "outside" are based on orientation or position relationships shown in the accompanying drawings, and are used only for ease of describing the present disclosure and simplifying the descriptions, rather than indicating or implying that the mentioned apparatus or component must have a particular orientation or must be constructed and operated in a particular orientation. Therefore, such terms should not be construed as limiting of the present disclosure.

Disclosed above are only preferred examples of the present disclosure, and certainly cannot be used to limit the scope of the claims of the present disclosure. A person of ordinary skill in the art can understand all or some processes of the foregoing examples, and equivalent changes made based on the present disclosure still fall within the scope of the present disclosure.

## Claims

1. A negative electrode sheet, comprising: a first region and a second region, the second region surrounding the first region, and a surface density of an active material in at least part of the second region being less than a surface density of an active material in the first region.

2. The negative electrode sheet according to claim 1, wherein the surface density of the active material in the first region is A1, and the surface density of the active material in at least part of the second region is A2, satisfying: 5%≤(A1-A2)/A1≤30%.

3. The negative electrode sheet according to claim 1, wherein the first region is rectangular, the first region comprises a first inner edge, a second inner edge, a third inner edge, and a fourth inner edge connected in sequence, the second region comprises a first outer edge, a second outer edge, a third outer edge, and a fourth outer edge connected in sequence, the first inner edge is close to and parallel to the first outer edge, the second inner edge is close to and parallel to the second outer edge, the third inner edge is close to and parallel to the third outer edge, and the fourth inner edge is close to and parallel to the fourth outer edge.

4. The negative electrode sheet according to claim 3, wherein a length of the second inner edge is less than a length of the first inner edge, a surface density of a region between the first inner edge and the first outer edge is less than the surface density of the first region, and a surface density of a region between the third inner edge and the third outer edge is less than the surface density of the first region.

5. The negative electrode sheet according to claim 3, wherein a width of the second region is L, satisfying: 2 mm≤L≤20 mm.

6. The negative electrode sheet according to claim 5, wherein widths of positions in the second region are equal.

7. The negative electrode sheet according to claim 1, wherein a compaction density of the active material on the negative electrode sheet ranges from 1.2 g/cm³ to 2.0 g/cm³.

8. The negative electrode sheet according to claim 1, wherein the surface density of the active material on the negative electrode sheet ranges from 50 g/m² to 200 g/m².

9. A battery core, comprising: a positive electrode sheet and the negative electrode sheet according to any one of claims 1 to 8, the positive electrode sheet and the negative electrode sheet being stacked, and four edges of an orthographic projection of the positive electrode sheet on the negative electrode sheet exceeding the four edges of the first region and being located within the second region.

10. The battery core according to claim 9, wherein the positive electrode sheet and the first region are both rectangular, the positive electrode sheet comprises a first edge, the first region comprises the first inner edge, the second region comprises the first outer edge close to the first inner edge, the first edge, the first inner edge, and the first outer edge are parallel, and the first edge is located between the first inner edge and the first outer edge.

11. The battery core according to claim 10, wherein a distance between the first edge and the first inner edge is B, satisfying: 2 mm≤B≤10 mm.

12. The battery core according to claim 9, wherein the battery core further comprises a positive electrode tab, an end of the positive electrode tab is connected to the positive electrode sheet, and another end of the positive electrode tab extends out of an edge of the negative electrode sheet.

13. An electric device, comprising: an electric apparatus and the battery core according to any one of claims 9 to 12, wherein the battery core supplies power to the electric apparatus.
